# EUROPÄISCHE PATENTSCHRIFT

(11) **EP 1 223 492 B1**
(45) Veröffentlichungstag und Bekanntmachung des Hinweises auf die Patenterteilung: **24.05.2006**
(21) Anmeldenummer: 01129199.4
(22) Anmeldetag: 10.12.2001
(51) Int. Cl.: G05D 16/06

(54) **Druckregelgerät für Gase**
Pressure controlling device for gases
Régulateur de pression pour des gaz

(30) Priorität: 13.12.2000 DE 10062053; 16.05.2001 DE 10123669
(43) Veröffentlichungstag der Anmeldung: 17.07.2002
(73) Patentinhaber: Elster-Instromet Production GmbH, 55252 Mainz-Kastel (DE)
(72) Erfinder: Keidl, Manfred, 65347 Eltville 3 (DE); Ladage, Paul, 65343 Eltville (DE)
(74) Vertreter: Harlacher, Mechthild

(56) Entgegenhaltungen:
- EP-A- 0 854 407
- DE-A- 19 515 731
- US-A- 5 669 409

## Beschreibung

Die Erfindung betrifft ein Druckregelgerät für Gase nach dem Oberbegriff des Anspruches 1.

Ein derartiges Druckregelgerät ist aus der EP-0 139504 bekannt. Das Druckregelgerät weist ein Regelventil mit einer integrierten Gasmangelsicherung auf. Diese sperrt die Gaszufuhr selbsttätig ab, wenn der Ausgangsdruck infolge eines Gasmangels einen Minimaldruck unterschreitet und gibt mit Hilfe einer Kleinstdurchflussöffnung selbsttätig die Gaszufuhr frei, wenn der Minimaldruck wieder überschritten wird.

Andere äturliche Druckregelgeräte mit integrierter Gasmangel sicherung sind aus DE 19515731 und aus EP-0854407 bekannt.

Die Gasmangelsicherungen funktionieren wie folgt: Beim Absinken des Eingangsdrucks sinkt ab einem bestimmten Druck auch der Ausgangsdruck. Der Schließteller wird auf einen Sitz gedrückt und verschließt die Durchtrittsöffnung, wenn der Ausgangdruck unterhalb eines Minimaldrucks sinkt. Die Kleinstdurchflussöffnung ermöglicht das Überströmen einer Kleinstmenge und das selbsttätige Öffnen, sobald der Eingangsdruck wieder steigt.

Um die Sicherheit zu erhöhen, stellt sich nun die Aufgabe, den Gasstrom nicht nur bei Gasmangel, sondern auch beim Auftreten einer unzulässigen Durchflusserhöhung bzw. wenn der Gasvolumenstrom einen maximalen Grenzwert überschreitet, automatisch abzusperren.

Eine unzulässige Erhöhung des Gasvolumenstroms entsteht als Folge eines Lecks in dem Rohrleitungsnetz, das dem Druckregelgerät nachgeschaltet ist. Ein Leck kann aufgrund einer bewussten Manipulation oder einer versehentlichen Beschädigung am Rohrleitungsnetz entstehen.

Zum automatischen Absperren von Gasleitungen bei derartigen Schadensfällen ist bekannt, vor Gasarmaturen oder Gasgeräten, Gasströmungswächter einzubauen. Diese unterbrechen die Gaszufuhr, wenn der Durchfluss einen maximalen Grenzwert übersteigt. Nachteilig ist, dass es sich hier um gesonderte Bauteile handelt, die einen zusätzlichen Installations- und Wartungsaufwand verursachen.

Aufgabe der Erfindung ist es demgemäss, ein Druckregelgerät mit integrierter Gasmangelsicherung mit möglichst geringem zusätzlichen Aufwand derart weiterzuentwickeln, dass das Druckregelgerät vollständig abgesperrt wird, wenn der Gasvolumenstrom bzw. der Durchfluss einen Grenzwert überschreitet.

Diese Aufgabe wird durch ein Druckregelgerät mit den Merkmalen des Anspruchs 1 gelöst.

Bei dieser Lösung ist besonders vorteilhaft, dass ein Gasströmungswächter in Form eines gesonderten Bauteils nicht notwendig ist. Zusätzliche Dichtstellen werden vermieden.

Der Gasstrom-Führungsring bildet einen rohrförmigen Strömungsweg für das Gas und lenkt den Gasstrom auf den Schließteller, so dass ein Stau entsteht, weil der Durchtrittsquerschnitt für das Gas zwischen Schließteller und Gasstrom-Führungsring auf einen schmalen Ringspalt reduziert wird. Dies führt zu einer Geschwindigkeitserhöhung des Gases mit der Folge, dass ein Druckabfall entsteht, dessen Höhe durchflussabhängig ist. Die entstehenden dynamischen Kräfte am Schließteller bewirken bei Überschreiten eines maximalen Durchfluss-Grenzwertes, dass der Schließteller entgegen der Federkraft des Federelements die Durchtrittsöffnung verschließt. Die Federkraft des Federelements wird in Abhängigkeit von einem definierten maximalem Grenzwert des Durchflusses festgelegt.

Vorteilhafterweise ist der Schließteller eingangsseitig angeordnet. Das hat den großen Vorteil, dass die Unterbrechung des Gasstroms weitestgehend unabhängig vom Eingangsdruck erfolgt, so dass eine werkseitige Voreinstellung des Schließdurchflusses in verschiedenen Abschalt-Leistungsklassen erfolgen kann. Beispielsweise können gleichartige Geräte mit Schaltgrenzen von z. b. 6 m³/h, 10 m³/h oder 15 m³/h hergestellt werden.

Die Erfindung wird im folgenden anhand eines bevorzugten Ausführungsbeispiels im Zusammenhang mit der Zeichnung näher erläutert.

Die Zeichnung zeigt in
Fig. 1 einen Schnitt durch eine erste Ausführungsform eines Gasdruckregelgerät;
Fig. 2 das Regelventil des Gasdruckreglers aus Fig.1 in vergrößerter Darstellung;

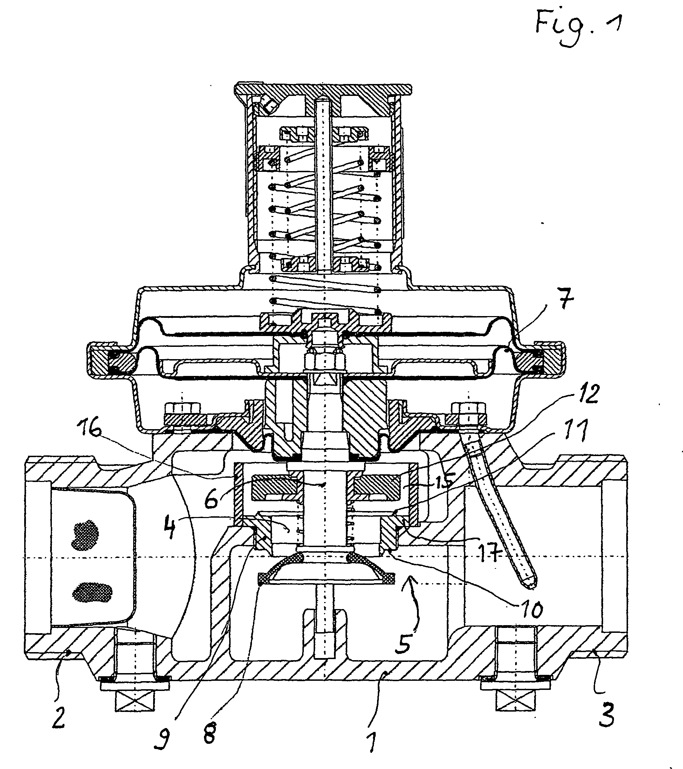

Fig. 1 einen Schnitt durch eine zweite Ausführungsform eines Gasdruckregelgerät.

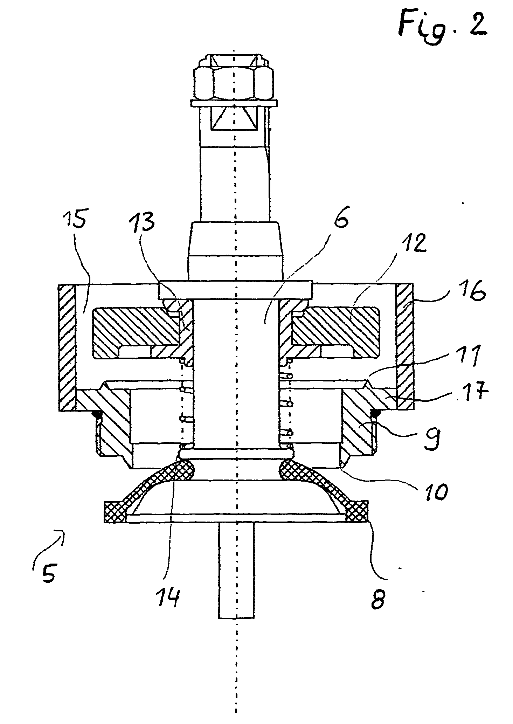

Das Druckregelgerät für Gase nach Fig. 1 und Fig. 2 weist ein Gehäuse 1 mit einem Einlasskanal 2 und einem Auslasskanal 3 auf.

Eine Durchtrittsöffnung 4, die sich zwischen dem Einlasskanal 2 und dem Auslasskanal 3 befindet, wird von einem Regelventil 5 beherrscht.

Das Regelventil 5, das in Fig.2 vergrößert dargestellt ist, umfasst eine Ventilspindel 6, an deren einem Ende sich eine Arbeitsmembran 7 und am anderen Ende ein Regelventilteller 8 befindet. Die Durchtrittsöffnung 4 wird in einem ringförmigen Ventildurchgang 9 ausgebildet, der auf übliche Art und Weise im Gehäuse 1 befestigt ist. Der Ventildurchgang 9 weist ausgangsseitig ein Ventilsitz 10 für den Regelventilteller 8 auf und eingangsseitig einen Schließtellersitz 11 für einen Gasmangel-Schließteller 12 auf, der auf der Ventilspindel 6 über eine Schiebepassung 13 beweglich angeordnet ist . Der Gasmangel-Schließteller 12, in dem eine nicht dargestellte Kleinstdurchflussöffnung ausgebildet ist, wird mittels eines Federelements 14 in Form einer Druckfeder, die sich an der Ventilspindel 6 abstützt, in Offenstellung gehalten.

Der Gasmangel-Schließteller 12 ist unter Bildung eines rohrförmigen Strömungsweges 15 für das Gas von einem Gasstrom-Führungsring 16 umgeben, der sich von der Durchtrittsöffnung 4 bis stromauf des Gasmangel-Schließtellers 12 erstreckt, und zwar so weit, dass sich eine Strömung ausbildet. Die Gasströmung wird auf den Gasmangel-Schließteller 12 gerichtet. Aufgrund der Umlenkung des Gasstroms entstehen am Schließteller 12 die notwendigen dynamischen Kräfte, um den Schalt- bzw. Schließvorgang zu bewirken.

Durch die Wahl der Federkraft des Federelements 14 wird der Grenzwert des Gasdurchflusses, der nicht überschritten werden darf, d. h. der Schließvolumenstrom festgelegt. Die Federkraft steht in Bezug zum freien Durchtrittsquerschnitt des rohrförmigen Strömungswegs 15.

Der Ventildurchgang weist außenseitig einen Ansatz 17 auf, auf den der Gasstrom-Führungsring 16 aufgesteckt ist.

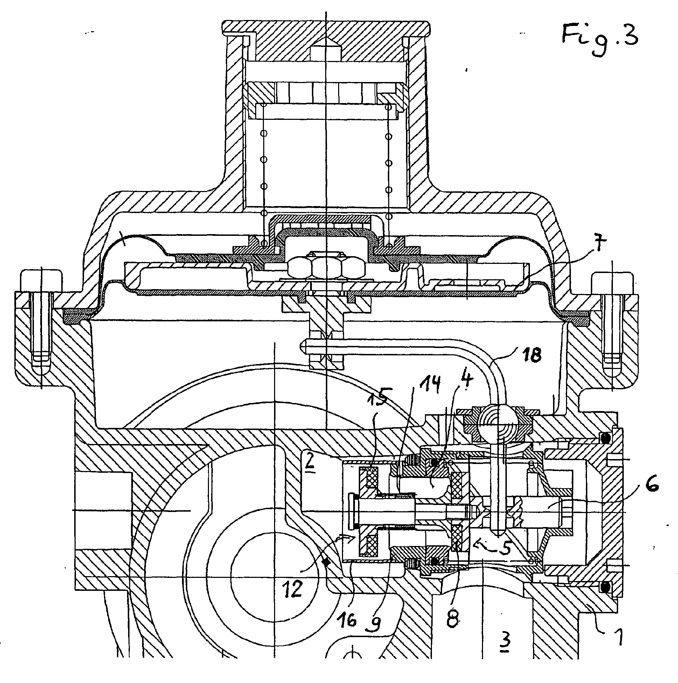

Bei der Ausführungsform nach Fig. 3 ist der Regelventilteller 8 mittels einer Ventilspindel 6 und mittels eines Hebelelement 18 mit der Arbeitsmembran 7 verbunden. Das Hebelelement 18 greift einerseits an der Ventilspindel 6 und anderseits an der Arbeitsmembran 7 an. Das Hebelelement 18 ermöglicht eine Umlenkung und gute Übertragung der Stellbewegung der Arbeitsmembran 7 auf die Ventilspindel 6.

Der Ventildurchgang 9 und der Gasstrom-Führungsring 16 sind bei diesem Ausführungsbeispiel einstückig ausgebildet. Ansonsten entspricht die Ausgestaltung des Regelventils 5 im wesentlichen der Konstruktion nach Fig. 2.

Der Gasstrom-Führungsring 16 kann auch auf andere Weise gestaltet und mit dem Ventildurchgang 9 oder dem Gehäuse 1 verbunden werden. So kann der Gasstrom-Führungsring aus dünnwandigem Kunststoff bestehen und in eine Nut im Ventildurchgang eingesteckt werden. Es ist jedoch auch möglich, den Gasstrom-Führungsring 16 als Teil des Gehäuses auszubilden.

## Patentansprüche

1. Druckregelgerät für Gase, insbesondere für Erdgas
mit einem Gehäuse (1) , das einen Einlasskanal (2) und einen Auslasskanal (3) aufweist, mit einer zwischen dem Einlasskanal (2) und dem Auslasskanal (3) angeordneten Durchtrittsöffnung (4),
mit einem Regelventilteller (8), der mit der Durchtrittsöffnung (4) zusammenwirkt und der mittels einer Ventilspindel (6) mit einer Arbeitsmembran (7) verbunden ist,
mit einem Gasmangel-Schließteller (12), der der Durchtrittsöffnung (4) axial verschiebbar zugeordnet ist und der von einem Federelement (14) in Offenstellung gehalten wird,
**dadurch gekennzeichnet,**
**dass** der Gasmangel-Schließteller (12) von einem Gasstrom-Führungsring (16) umgeben ist, der einen rohrförmigen Strömungswegs (15) für das Gas bildet, wobei sich der Gasstrom-Führungsring (16) in Achsrichtung von der Durchtrittsöffnung (4) bis über den Gasmangel-Schließtellers (12) erstreckt und wobei die Federkraft des Federelements (14) in Abhängigkeit von einem oberen Grenzwert des Durchflusses festgelegt ist.

2. Druckregelgerät nach Anspruch 1,
**dadurch gekennzeichnet,**
**dass** der Gasmangel-Schließteller (12) eingangsseitig auf der Ventilspindel (6) angeordnet ist.

3. Druckregelgerät nach Anspruch 1 oder 2,
**dadurch gekennzeichnet,**
**dass** die Durchtrittsöffnung (4) in einem im wesentlichen ringförmigen Ventildurchgang (9) ausgebildet ist, der stirnseitig je einen Ventilsitz (10) und einen Schließtellersitz (11) aufweist.

4. Druckregelgerät nach Anspruch 3,
**dadurch gekennzeichnet,**
**dass** der Ventildurchgang außenseitig einen Absatz (17) aufweist, auf den der Gasstrom-Führungsring (16) aufgesteckt ist.

5. Druckregelgerät nach Anspruch 3,
**dadurch gekennzeichnet,**
**dass** der Ventildurchgang (9) und der Gasstrom-Führungsring (16) einstückig ausgebildet sind.

6. Druckregelgerät nach einem der Ansprüche 1 bis 5,
**dadurch gekennzeichnet,**
**dass** die Ventilspindel (6) mit der Arbeitsmembran (7) mittels eines Hebelelements (18) verbunden ist.

## Claims

1. Pressure-regulating apparatus for gases, in particular for natural gas, with a housing (1) which has an inlet duct (2) and an outlet duct (3), with a passage orifice (4) arranged between the inlet duct (2) and the outlet duct (3), with a regulating-valve disc (8) which cooperates with the passage orifice (4) and is connected to a working diaphragm (7) by means of a valve spindle (6), and with a gas-failure closing plate (12) which is assigned axially displaceably to the passage orifice (4) and is held in the open position by a spring element (14), **characterized in that** the gas-failure closing plate (12) is surrounded by a gas-stream guide ring (16) which forms a tubular flow path (15) for the gas, the gas-stream guide ring (16) extending in the axial direction from the passage orifice (4) beyond the gas-failure closing plate (12), and the spring force of the spring element (14) being defined as a function of an upper limit value of the throughflow.

2. Pressure-regulating apparatus according to Claim 1, **characterized in that** the gas-failure closing plate (12) is arranged, on the entry side, on the valve spindle (6).

3. Pressure-regulating apparatus according to Claim 1 or 2, **characterized in that** the passage orifice (4) is formed in an essentially annular valve passage (9) which has on the end face in each case a valve seat (10) and a closing-plate seat (11).

4. Pressure-regulating apparatus according to Claim 3, **characterized in that** the valve passage has, on the outside, a shoulder (17), onto which the gas-stream guide ring (16) is attached.

5. Pressure-regulating apparatus according to Claim 3, **characterized in that** the valve passage (9) and the gas-stream guide ring (16) are produced in-one piece.

6. Pressure-regulating apparatus according to one of Claims 1 to 5, **characterized in that** the valve spindle (6) is connected to the working diaphragm (7) by means of a lever element (18).

## Revendications

1. Appareil de régulation de la pression d'un gaz, en particulier pour le gaz naturel, qui présente:
un boîtier (1) doté d'un canal d'entrée (2) et d'un canal de sortie (3) ainsi que d'une ouverture de passage (4) disposée entre le canal d'entrée (2) et le canal de sortie (3),
une tête (8) de soupape de régulation qui coopère avec l'ouverture de passage (4) et qui est reliée à une membrane de travail (7) au moyen d'une tige de soupape (6),
un plateau (12) de fermeture en cas de manque de gaz qui est associé à l'ouverture de passage (4) de manière à y coulisser axialement et est maintenu en position ouverte par un élément élastique (14),
**caractérisé en ce que**
le plateau (12) de fermeture en cas de manque de gaz est entouré par un anneau (16) de guidage de l'écoulement de gaz qui forme pour le gaz un parcours d'écoulement (15) de forme tubulaire, l'anneau (16) de guidage de l'écoulement de gaz s'étendant dans la direction axiale depuis l'ouverture de passage (4) jusqu'au-dessus du plateau (12) de fermeture en cas de manque de gaz, la force élastique de l'élément élastique (14) étant définie en fonction d'une valeur limite supérieure du débit.

2. Appareil de régulation de pression selon la revendication 1, **caractérisé en ce que** le plateau (12) de fermeture en cas de manque de gaz est disposé du côté de l'entrée sur la tige de soupape (6).

3. Appareil de régulation de pression selon les revendications 1 ou 2, **caractérisé en ce que** l'ouverture de passage (4) est formée dans un passage (9) essentiellement annulaire ménagé dans la soupape et présente du côté frontal un siège de soupape (10) et un siège (11) de plateau de fermeture.

4. Appareil de régulation de pression selon la revendication 3, **caractérisé en ce que** le passage de soupape présente du côté extérieur un appendice (17) sur lequel l'anneau (16) de guidage de l'écoulement de gaz est enfiché.

5. Appareil de régulation de pression selon la revendication 3, **caractérisé en ce que** le passage (9) de la soupape et l'anneau (16) de guidage de l'écoulement de gaz sont réalisés en une seule pièce.

6. Appareil de régulation de pression selon l'une des revendications 1 à 5, **caractérisé en ce que** la tige de soupape (6) est reliée à la membrane de travail (7) au moyen d'un élément à levier (18).
